# EUROPÄISCHE PATENTSCHRIFT

(11) **EP 2 505 416 B1**
(45) Veröffentlichungstag und Bekanntmachung des Hinweises auf die Patenterteilung: **15.01.2014**
(21) Anmeldenummer: 11160041.7
(22) Anmeldetag: 28.03.2011
(51) Int. Cl.: B60L 7/10, B60M 3/00

(54) **Verfahren und System zur Bereitstellung von elektrischer Energie für ein Eisenbahnnetzwerk befahrende Schienenfahrzeuge**
Method and system for providing electrical energy for rail vehicles on a rail network
Procédé et système de préparation d'énergie électrique pour des véhicules sur rails parcourant un réseau de voie ferrée

(43) Veröffentlichungstag der Anmeldung: 03.10.2012
(73) Patentinhaber: Siemens Schweiz AG, 8047 Zürich (CH); Siemens Aktiengesellschaft, 80333 München (DE)
(72) Erfinder: Bode, Christian, 38118 Braunschweig (DE); Fischer, Michael, 8932 Mettmenstetten (CH); Tieftrunk, Bernd, 38118 Braunschweig (DE); Windolf, Wolfgang, 38179 Schwülper (DE)
(74) Vertreter: Fischer, Michael

(56) Entgegenhaltungen:
- EP-A1- 0 997 340
- DE-A1-102008 020 981
- DE-C1- 19 652 407
- KLINGE R ET AL: "BEWERTUNGSKRITERIEN ZUR RUCKSPEISEFAHIGKEIT VON TRIEBFAHRZEUGEN. ÖEVALUATION CRITERIA OF POWER REGENERATION CAPABILITY OF MOTOR VEHICLES", ELEKTRISCHE BAHNEN, OLDENBOURG INDUSTRIEVERLAG, MUNCHEN, DE, Bd. 94, Nr. 7, 1. Juli 1996 (1996-07-01), Seiten 200-204, XP000598272, ISSN: 0013-5437

## Beschreibung

Die vorliegende Erfindung betrifft ein Verfahren zur Bereitstellung von elektrischer Energie für ein Eisenbahnnetzwerk befahrende Schienenfahrzeuge

In den entwickelten Ländern sind Eisenbahnnetzwerke heutzutage zu einem überwiegenden Teil mit Oberleitungen elektrifiziert. Die Schienenfahrzeuge nehmen die elektrische Leistung über einen Pantographen aus dem Fahrdraht der Oberleitung auf. Über diesen Fahrdraht sind in Abhängigkeit von der Leistungsaufnahme des Schienenfahrzeugs elektrische Leistungen von einigen Megawatt pro Schienenfahrzeug bereitzustellen. Diese Leistungen sind in Abhängigkeit von der örtlichen Verteilung der die elektrische Leistung bereitstellenden Unterwerke über sehr grosse Stelldistanzen von vielen Kilometern dauerhaft zu bevorraten. Dadurch sind sehr oft Abschnitte bestromt, auf denen über eine längere Zeit gesehen nur sehr wenige Schienenfahrzeuge zirkulieren und eine elektrische Leistung zu bevorraten ist, die die tatsächlich benötige Leistung um ein Vielfaches übersteigt.

Neben den Leistungsverlusten bei der Heranführung der elektrischen Leistungen über grosse Stelldistanzen wird auch sehr viel Leistung an Abschnitten bereitgestellt, wo diese nicht benötigt wird. Daher ist die Kapazität der Bereitstellung der elektrischen Leistungen stets auf die ungünstigste Spitzenlast auszulegen und entsprechend zu bevorraten. Insgesamt resultiert daher eine in der Regel nicht bedarfsgerechte ökonomische Bereitstellung der elektrischen Leistung. Zudem ist zur Bereitstellung der Spitzenlastzustände immer auch eine vergleichsweise teure Infrastruktur erforderlich, was entsprechende Anfangsinvestitionen und den Betrieb dieser Infrastruktur erforderlich macht.

Um Lastspitzen abfedern zu können, sind daher in Eisenbahnnetzwerken sogenannte mechanische Schwungradspeicher vorgesehen, die in Zeiten geringer Last beschleunigt und in Zeiten von besonderem Lastbedarf ihre Bremsenergie in das elektrische Versorgungsnetz zurückspeisen. Derartige Schwungradspeicher sind aber auch nur durch entsprechendes Kapital erstellbar und bedürfen wahrend ihrer Lebensdauer einer entsprechenden Wartung.

Aus der deutschen Patentschrift DE 196 52 407 C1 ist weiter ein Verfahren zur Bereitstellung von elektrischer Energie für ein Eisenbahnnetzwerk befahrende Schienenfahrzeuge gelöst, bei dem in einer Unterstation ein Steuermodul zur Erkennung und/oder Koordinierung rückgespeister Energie und auf dem Schienenfahrzeug ein Beschleunigungsmodul vorgesehen sind, das einem vom Steuermodul erzeugte Aufforderung zur Beschleunigung in ein entsprechendes Antriebssteuersignal umsetzt. Damit kann die rückgespeiste Energie bestmöglich einem anderen Schienenfahrzeug zu dessen Beschleunigung zur Verfügung gestellt werden. Weitergehende Eingriffsmöglichkeiten sind in dieser Patentschrift jedoch nicht offenbart.

Der vorliegenden Erfindung liegt daher die Aufgabe zugrunde, ein Verfahren und ein System zur Bereitstellung von elektrischer Energie für ein Eisenbahnnetzwerk befahrende Schienenfahrzeuge anzugeben, die sich an einer bedarfsgerechten Bevorratung und Auslegung der elektrischen Leistungsbereitstellung orientieren und somit helfen, Investitionen in entsprechende Hardware einzusparen.

Bezüglich des Verfahrens wird diese Aufgabe erfindungsgemäss durch ein Verfahren zur Bereitstellung von elektrischer Energie für ein Eisenbahnnetzwerk befahrende Schienenfahrzeuge, umfassend die folgenden Schritte:
a) Ermitteln der aktuell fahrenden Schienenfahrzeuge und Erfassen ihrer Fahrparameter;
b) Ermitteln des Lastzustandes und/oder Lastverteilung im Eisenbahnnetzwerk; und
c) Anheben der Geschwindigkeit mindestens eines Schienenfahrzeugs über eine fahrplanmässig vorgesehene

Reisegeschwindigkeit im Falle einer unterhalb eines Lastoptimums gelegenen Lastzustandes und/oder Lastverteilung und/oder Absenken der Geschwindigkeit mindestens eines Schienenfahrzeugs zur rekuperativen Einspeisung von elektrischer Energie im Falle eines oberhalb eines Lastoptimums gelegenen Lastzustandes und/oder Lastverteilung, wobei zur Lastoptimierung die Geschwindigkeit für mindestens ein Schienenfahrzeug vorausschauend angehoben wird, bevor ein anderes Schienenfahrzeug aufgrund eines Streckenprofils und/oder der Beladung einen besonderen Bedarf an elektrischer Leistung aufweist.

Bezüglich des Systems wird diese Aufgabe erfindungsgemäss durch ein System zur Bereitstellung von elektrischer Energie für ein Eisenbahnnetzwerk befahrende Schienenfahrzeuge gelöst, umfassend:
a) eine Netzsteuerungseinheit zum Ermitteln der aktuell fahrenden Schienenfahrzeuge und zum Erfassen ihrer Fahrparameter;
b) innerhalb der Netzsteuerungseinheit eine Laststeuerungsinstanz zum Ermitteln des Lastzustandes und/oder Lastverteilung im Eisenbahnnetzwerk; und
c) die Laststeuerungsinstanz die aktuell fahrenden Schienenfahrzeuge so steuert, dass ein Anheben der Geschwindigkeit mindestens eines Schienenfahrzeugs über eine fahrplanmässig vorgesehene Reisegeschwindigkeit im Falle einer unterhalb eines Lastoptimums gelegenen Lastzustandes und/oder Lastverteilung und/oder ein Absenken der Geschwindigkeit mindestens eines Schienenfahrzeugs zur rekuperativen Einspeisung von elektrischer Energie im Falle eines oberhalb eines Lastoptimums gelegenen Lastzustandes und/oder Lastverteilung vorgesehen ist, wobei zur Lastoptimierung die Geschwindigkeit für mindestens ein Schienenfahrzeug vorausschauend angehoben wird, bevor ein anderes Schienenfahrzeug aufgrund eines Streckenprofils und/oder der Beladung einen besonderen Bedarf an elektrischer Leistung aufweist

Auf diese Weise wird es unter Einsatz einer bereichsweise arbeitenden Netzsteuerungseinheit erreicht, dass die fahrenden Züge selbst als Energiespeicher durch Erhöhen der Geschwindigkeit und/oder als Energiequelle durch das Absenken der Geschwindigkeit genutzt werden können. Ausser einem zusätzlichen Aufwand in die Steuerung dieser Erhöhungen und Absenkungen erfordert diese Lösung keine zusätzlichen Investitionen in entsprechende Hardware, weil moderne Züge heutzutage in der Regel über Wirbelstrombremsen verfügen und somit rekuperativ Energie in die Versorgungsleistung zurückspeisen können. Dabei können sogar gleichzeitig mehrere Schienenfahrzeuge auf ein höheres Geschwindigkeitsniveau befördert werden, wenn absehbar ist, dass beispielsweise ein anderes Schienenfahrzeug wegen einer Steigungsstrecke ein erhöhtes Mass an elektrischer Leistung benötigt. Alternativ oder ergänzend wäre es auch möglich, ein Schienenfahrzeug, das sich einem relativ hohen Punkt befindet, wie zum Beispiel auf dem Scheitelpunkt einer alpinen Querung, hinsichtlich seiner Abfahrt auf die Gefällstrecke so steuern, dass die in elektrische Energie umgewandelt Bremsenergie auf der Gefällstrecke einem entgegenkommenden Schienenfahrzeug während seiner Steigungsfahrt zur Verfügung gestellt wird.

Eine besonders wirksame Steuerung ergibt sich, wenn das Lastoptimum unter Vermeidung der Erzeugung von Lastspitzen ermittelt wird. Der zeitliche und räumliche Verlauf des Lastoptimums kann daher unter starker Glättung ermittelt werden, so dass reale Lastzustände unterhalb und/oder oberhalb dieses Lastoptimums besonders schnell zu Tage treten und entsprechend zur schnellen Anpassung auf das Lastoptimum nachgeregelt werden können. Bei einem Lastzustand unterhalb des Lastoptimums kann dies bedeuten, dass ein oder mehrere Schienenfahrzeuge beschleunigt werden, um die entsprechend höheren Geschwindigkeit die verfügbare elektrische Energie in mechanischer Energie zu speichern. Bei einem Lastzustand oberhalb des Lastoptimums versucht die Laststeuerungsinstanz einen oder mehrere mit bereits erhöhter Geschwindigkeit verkehrende Schienenfahrzeug abzubremsen und dabei die Bremsenergie in Form von elektrischer Energie rekuperativ in das elektrische Versorgungsnetzwerk, d.h. in der Regel in die Oberleitung oder auch seitlich verlaufende Kontaktlinie, einzuspeisen, um so dem Lastoptimum möglichst nahe zu kommen.

Um die Steuerung dieser Vorgänge hinreichend transparent und mit hinreichend kurzer Zeitkonstante bewerkstelligen zu können, kann mit der Netzsteuerungsinstanz die zeitliche und räumliche Verteilung des besonderen Bedarfs an elektrischer Leistung ermittelt werden bzw. dieser besondere Bedarf von einem Schienenfahrzeug an die Netzsteuerungsinstanz gemeldet werden. Dabei kann vorzugsweise ergänzend auch noch vorgesehen sein, dass auch andere Schienenfahrzeug ihre Bereitschaft zum Anheben der Geschwindigkeit an die Netzsteuerungsinstanz melden. Somit kennt die Netzsteuerungsinstanz dann alle positiven wie negativen Kandidaten (Positiv im Sinne beschleunigen können um mehr mechanische Energie zu speichern; negativ im Sinne von erhöht elektrische Leistung konsumierend).

In einer weiteren vorteilhaften Ausgestaltung der vorliegenden Erfindung kann es vorgesehen sein, dass das Eisenbahnnetzwerk in Fahrabschnitte unterteilt wird, wobei:
a) die Fahrabschnitte zur Bereitstellung der elektrischen Energie individuell ansteuer- und versorgbar sind;
b) ein in Abhängigkeit von der Zugart ermitteltes räumliches und zeitliches Leistungsaufnahmeprofil für eine Fahrt entlang einer vorbestimmten Anzahl von nacheinander zwischen zwei Stationen befahrenen Fahrabschnitten für die Netzsteuerungsinstanz bereitgestellt wird; und
c) die Netzsteuerungsinstanz mit der Abfahrt des Schienenfahrzeugs aus der Abfahrtstation mindestens eine gemäss dem Leistungsaufnahmeprofil vorgegebene Leistung abschnittsweise bereitstellt und dabei zumindest teilweise auf die rekuperativ eingespeiste elektrische Leistung zurückgreift. Auf diese Weise liegt eine sehr viel genauere Kenntnis der räumlichen und zeitlichen Verteilung der benötigten elektrischen Leistung vor, die so bedarfsgerecht bereitgestellt werden kann. Die Netzsteuerungsinstanz hat so genau Kenntnis über besondere Leistungsanforderungen an problematischen Abschnitten, wie längeren Steigungs- und/oder Gefällstrecken, hinsichtlich des erwarteten Zeitpunkts und der erwarteten Zeitdauer bestimmter Leistungsberge und/oder -täler.

In einer weiteren vorteilhaften Ausgestaltung der vorliegenden Erfindung kann es vorgesehen sein, dass die Netzsteuerungsinstanz die Leistungsaufnahmeprofile mehrerer Schienenfahrzeuge abschnittsweise kumulativ bereitstellt. Im günstigsten Fall kann daher die Netzsteuerungsinstanz über den zeitlichen Verlauf und die jeweiligen Höhe des gesamten, aus den einzelnen Versorgungsabschnitten zusammengesetzten Eisenbahnnetzwerkes haben.

Zur Vermeidung unnötiger Schnittstellen in der Datenübermittlung kann es weiter vorgesehen sein, dass die Netzsteuerungsinstanz ein Unterwerk, welches elektrische Leistung direkt in einen Fahrabschnitt einspeist, direkt steuert. Dabei kann die Netzsteuerungseinheit auch hierarchisch so befähigt sein, aus dem Unterwerk heraus eine Energieerzeugungseinheit direkt zur Erzeugung der bereitzustellenden Leistung einzustellen. So kann beispielsweise ein einem bestimmten Abschnitt zugeordnetes Pumpspeicherkraftwerk entsprechend dem mittels der Leistungsaufnahmeprofile abgeleiteten Leistungsbedarf gesteuert werden. Bei einer rekuperativen Rückeinspeisung von elektrischer Leistung könnte diese sogar verwendet werden, zusätzliche Energiemengen einzuspeichern, beispielsweise durch das Hochpumpen von Wasser in den Speichersee eines Pumpspeicherkraftwerkes oder das Beschleunigen eines das Netzwerk befahrenden weiteren Zuges.

Um die Leistungsaufnahmeprofile möglichst wirklichkeitsnah bestimmen zu können, kann es in einer weiteren vorteilhaften Ausgestaltung der Erfindung vorgesehen sein, in die Ermittlung des Leistungsaufnahmeprofils die Passagier- und/oder Güterbeladung des Schienenfahrzeugs, insbesondere des Zugverbundes, eingehen zu lassen. Ebenfalls können auch klimatische Daten, die eine Aussage über die Leistungsaufnahme von Heizungen und/oder Klimaanlagen in den Zügen erlauben, oder sonst wie die Leistungsaufnahme der Schienenfahrzeuge beeinflussende Daten herangezogen werden, die Leistungsaufnahmeprofile so wirklichkeitsnah wie möglich zu bestimmen.

Bevorzugte Ausführungsbeispiele werden anhand einer Zeichnung näher erläutert. Dabei zeigen:
- Figur 1: eine schematische Ansicht eines Eisenbahnnetzwerks mit darauf verkehrenden Schienenfahrzeugen und einer Netzsteuerungseinheit; und
- Figur 2: eine schematische Ansicht einer in fünf Versorgungsabschnitte unterteilte Fahrstrecke und das Leistungsaufnahmeprofil entlang dieser Fahrstrecke für einen bestimmten Zugtyp.

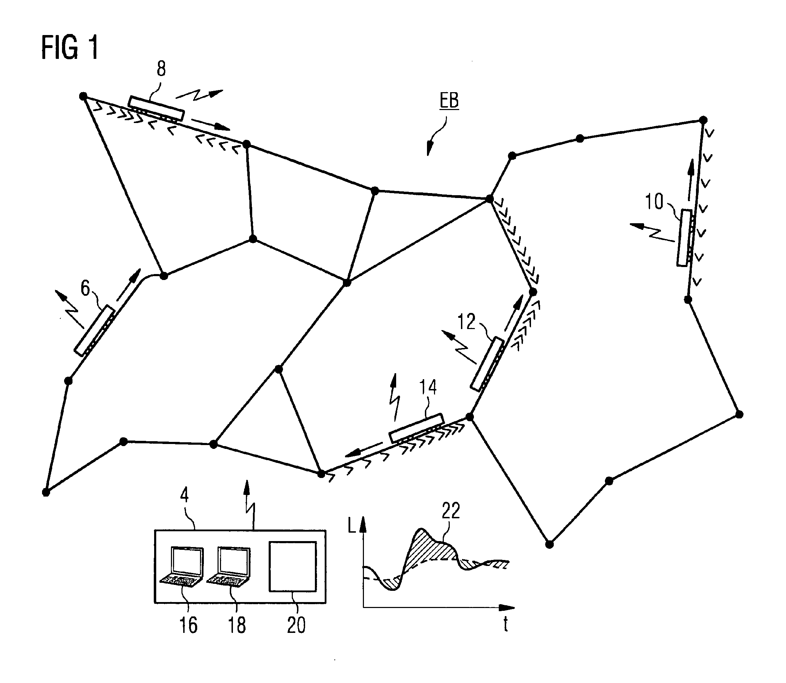

Figur 1 zeigt in schematischer Ansicht ein Eisenbahnnetzwerk EB mit einer Anzahl von darauf verkehrenden Schienenfahrzeugen 6 bis 14 sowie einer mit diesen Schienenfahrzeugen drahtlos kommunizierenden Netzsteuerungseinheit 4. Die Netzsteuerungseinheit 4 umfasst eine Anzahl von Bildschirmarbeitsplätzen 16, 18 mit dispositiven Leitstellenaufgaben sowie eine Laststeuerungsinstanz 20. Die Netzsteuerungseinheit 4 weist ebenfalls hier nicht weiter dargestellte Rechenmittel auf, mit denen die vielfältigen Aufgaben einer dispositiven Leitzentrale gelöst werden können. Neben der Netzsteuerungseinheit 4 ist ein Lastverlauf L mit einem rechnerischen Verlauf für ein Lastoptimum (punktierte Linie) beispielhaft gezeigt. Flächen, die über dem punktierten Lastoptimum verlaufen, zeigen eine potentielle Leistungsanforderung über dem Lastoptimum an; Flächen, die unter dem punktierten Lastoptimum verlaufen, zeigen entsprechend eine Leistungsreserve an. Nach Art eines Energy-Brokers werden die Schienenfahrzeuge 6 bis 14 nun so hinsichtlich ihrer Geschwindigkeit gesteuert, dass sich die tatsächliche Lastaufnahme im Eisenbahnnetzwerk EB möglichst nahe am Verlauf des Lastoptimums befindet. Als einfaches Beispiel kann das Schienenfahrzeug 12 dienen, dass sich in Kürze auf einer Steigungsstrecke befindet. Die Netzsteuerungseinheit 4, deren Laststeuerungsinstanz diesen besonderen erhöhten Bedarf kennt, steuert nur beispielweise die abwärtsfahrenden Schienenfahrzeuge 8, 10, und 14 sowie das ebenfahrende Schienenfahrzeug 6 so, dass diese unter Beachtung der für die jeweiligen Strecken geltenden Höchstgeschwindigkeit eine möglichst hohe Geschwindigkeit erreichen, die dann später durch rekuperatives Bremsen wieder herabgesetzt wird. Auf diese Weise können die Schienenfahrzeuge 6, 8, 10 und 14 aufgrund ihrer überschüssigen Geschwindigkeit in elektrische Energie umgewandelte Bremsenergie bereitstellen, die dem Fahrzeug 12 zur Verfügung gestellt werden kann. Somit verbrauchen die Schienenfahrzeuge 6, 8, 10 und 14 im Zeitpunkt des erhöhten Leistungsbedarfs beim Schienenfahrzeug 12 nicht nur weniger Leistung als üblich, sondern sie können aufgrund ihrer zuvor erhöhten Geschwindigkeit auch noch elektrische Leistung beim Abbremsen in das Netz zugunsten von Schienenfahrzeug 12 zurückspeisen. Auf diese Weise ergibt sich ein erheblich geglätteter Verlauf der Last L, so wie dies beispielhaft in dem kleinen Verlauf neben der Netzsteuerungseinheit 4 in Figur 1 gezeigt ist. Der grosse in der kleinen Grafik dargestellte Lastberg 22 wird daher durch das Bereitstellen von rekuperativ umgewandelter Bremsenergie der Schienenfahrzeuge 6, 8, 10, 14 ausgeglichen. Bei den unterhalb des Verlaufs des Lastoptimums gelegenen Flächen entscheidet die Laststeuerungsinstanz 20, welches Schienenfahrzeuge beschleunigt und auf einem höheren Geschwindigkeitsniveau gehalten wird, um so die hier zur Verfügung stehende Energie zumindest zum Teil für den Abbau der vorstehend beschriebenen Lastberge 22 bereit zu halten.

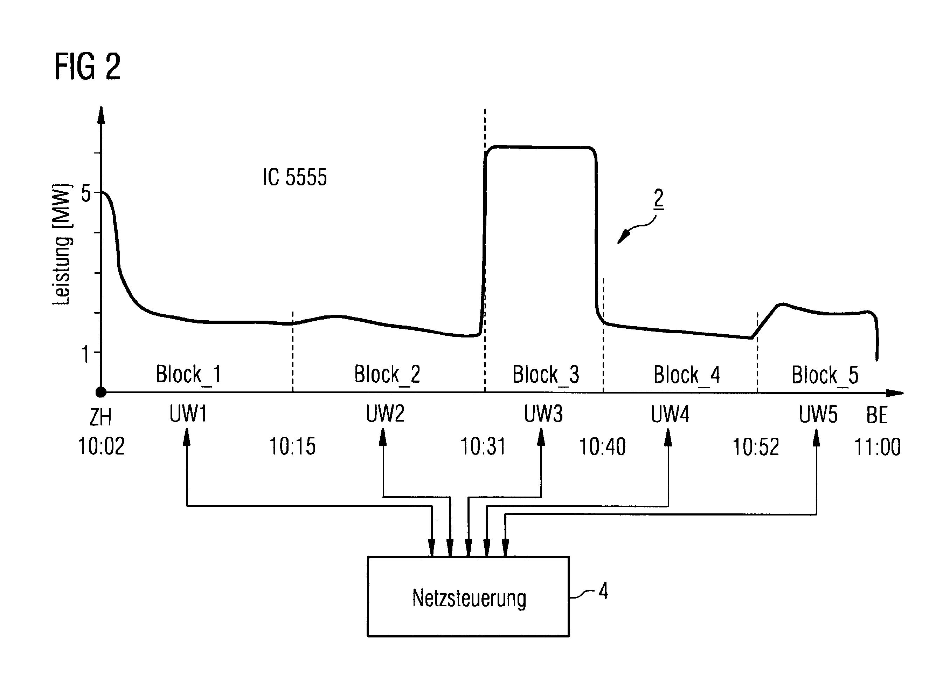

Die Figur 2 zeigt nun einen beispielhaften Weg auf, wie die Netzsteuerungseinheit 4 genaue Kenntnis über die im Eisenbahnnetzwerk erforderliche Lastverteilung gewinnen kann. Schematisch ist eine hinsichtlich der elektrischen Leistungsversorgung aus fünf Abschnitten Block_1 bis Block_5 aufgebaute Fahrstrecke von Stadt ZH nach Stadt BE gezeigt. Jedem dieser Abschnitte Block_1 bis Block_5 ist ein Unterwerk UW1 bis UW5 zugeordnet, dass die elektrische Leistung in den hier nicht weiter dargestellten Fahrdraht des jeweiligen Abschnitts Block_1 bis Block_5 einspeist. Das Beispiel zeigt ein voraussichtliches Leistungsaufnahmeprofil 2 für einen Intercity-Zug IC5555 auf seiner Fahrt von Stadt ZH nach Stadt BE. Besonders auffällig an diesem Leistungsaufnahmeprofil 2 ist der Verlauf im dritten Abschnitt Block_3, wo der IC5555 für eine Dauer von etwa knapp 10 Minuten zur Bewältigung einer Steigungsstrecke eine Leistung von mehr als 5 MW benötigt. Bei einer fahrplanmässigen Abfahrt dieses Zuges in Stadt ZH um 10:02 Uhr weiss die die Unterwerke UW1 bis UW5 steuernde Netzsteuerungseinheit 4, dass diese Leistung im Block 3 etwa in der Zeit von 10:31 bis 10:40 zur Verfügung zu stellen ist.

Auf diese Weise kennt nun die Netzsteuerungseinheit 4 den zeitlichen und räumlichen Verlauf des Leistungsbedarfs für diesen einen Zug IC5555. In der Netzsteuerungseinheit 4 können nun die zeitlichen und räumlichen Leistungsaufnahmeprofile 2 für die geplanten Zugfahrten aufkumuliert werden, so dass sich so ein zeitliches und räumliches kumulatives Leistungsaufnahmeprofil ergibt. Damit steht der Netzsteuerungseinheit 4 jederzeit eine aktuelle Kenntnis der bereitzustellenden Leistungen pro Abschnitt Block_1 bis Block_5 zur Verfügung und die Unterwerke UW1 bis UW5 und die übrigen fahrenden Schienenfahrzeuge können entsprechend angesteuert werden, was auch bedeuten kann, dass die Unterwerke UW1 bis UW5 auch entsprechende Leistungen beispielsweise von einem hier nicht weiter dargestellten Pumpspeicherkraftwerk abrufen können oder eben die Schienenfahrzeuge zuvor aufgebaute Geschwindigkeit rekuperativ abbauen und dabei die Bremsenergie als elektrische Energie in den Fahrdraht zurückspeisen.

Im hier gezeigten besonderen Fall des dritten Abschnitts Block_3 können die gewonnenen kumulativen Informationen aber auch so ausgewertet werden, dass beispielsweise fahrplanmässig verhindert wird, dass ein zweiter Zug die Steigungsstrecke befährt, während der erste Zug diese noch nicht verlassen hat. Somit wäre die maximale Leistungsaufnahme in diesem Abschnitt stark glättbar und eine Spitzenlastauslegung käme theoretisch mit einer deutlich geringeren maximalen Leistungsbereitstellung aus. Weiter könnte der Fahrplan so synchronisiert sein, dass ein die Steigungsstrecke absolviert habendes Schienenfahrzeug am höchsten Punkt auf die Gefällestrecke geht, wenn am Steigungsabschnitt ein Schienenfahrzeug mit der Steigung beginnt oder sich bereits darin befindet.

## Patentansprüche

1. Verfahren zur Bereitstellung von elektrischer Energie für ein Eisenbahnnetzwerk (EB) befahrende Schienenfahrzeuge (6 bis 14), umfassend die folgenden Schritte:
a) Ermitteln der aktuell fahrenden Schienenfahrzeuge (6 bis 14) und Erfassen ihrer Fahrparameter;
b) Ermitteln des Lastzustandes (L) und/oder Lastverteilung im Eisenbahnnetzwerk (EB); und
c) Anheben der Geschwindigkeit mindestens eines Schienenfahrzeugs (6, 8, 10, 14)über eine fahrplanmässig vorgesehene Reisegeschwindigkeit im Falle einer unterhalb eines Lastoptimums gelegenen Lastzustandes und/oder Lastverteilung und/oder Absenken der Geschwindigkeit mindestens eines Schienenfahrzeugs zur rekuperativen Einspeisung von elektrischer Energie im Falle eines oberhalb eines Lastoptimums gelegenen Lastzustandes und/oder Lastverteilung, wobei zur Lastoptimierung die Geschwindigkeit für mindestens ein Schienenfahrzeug (6, 8, 10, 14) vorausschauend angehoben wird, bevor ein anderes
Schienenfahrzeug (12) aufgrund eines Streckenprofils und/oder der Beladung einen besonderen Bedarf an elektrischer Leistung aufweist.

2. Verfahren nach Anspruch 1, bei dem das Lastoptimum unter Vermeidung der Erzeugung von Lastspitzen ermittelt wird.

3. Verfahren nach Anspruch 1 oder 2, bei dem mit einer Netzsteuerungsinstanz (4) die zeitliche und räumliche Verteilung des besonderen Bedarfs an elektrischer Leistung ermittelt wird bzw. dieser besondere Bedarf von einem Schienenfahrzeug (6 bis 14) an die Netzsteuerungsinstanz gemeldet wird, wobei vorzugsweise auch andere Schienenfahrzeug ihre Bereitschaft zum Anheben der Geschwindigkeit an die Netzsteuerungsinstanz melden.

4. Verfahren nach einem der Ansprüche 1 bis 3, bei dem das Eisenbahnnetzwerk in Fahrabschnitte (Block_1 bis Block_5) unterteilt wird, wobei:
a) die Fahrabschnitte (Block_1 bis Block_5) zur Bereitstellung der elektrischen Energie individuell ansteuer- und versorgbar sind;
b) ein in Abhängigkeit von der Zugart ermitteltes räumliches und zeitliches Leistungsaufnahmeprofil (2) für eine Fahrt entlang einer vorbestimmten Anzahl von nacheinander zwischen zwei Stationen (ZH, BE) befahrenen Fahrabschnitten (Block_1 bis Block_5) für die Netzsteuerungsinstanz (4) bereitgestellt wird; und
c) die Netzsteuerungsinstanz (4) mit der Abfahrt des Schienenfahrzeugs aus der Abfahrtstation mindestens eine gemäss dem Leistungsaufnahmeprofil (2) vorgegebene Leistung abschnittsweise bereitstellt und dabei zumindest teilweise auf die rekuperativ eingespeiste elektrische Leistung zurückgreift.

5. Verfahren nach Anspruch 4, bei dem die
Netzsteuerungsinstanz (4) die Leistungsaufnahmeprofile (2) mehrerer Schienenfahrzeuge abschnittsweise kumulativ bereitstellt.

6. Verfahren nach Anspruch 4 oder 5, bei dem die Netzsteuerungsinstanz (4) ein Unterwerk (UW1 bis UW5), welches elektrische Leistung direkt in einen Fahrabschnitt (Block_1 bis Block_5) einspeist, direkt steuert.

7. Verfahren nach Anspruch 6, bei dem die
Netzsteuerungseinheit (4) aus dem Unterwerk (UW1 bis UW5) heraus eine Energieerzeugungseinheit direkt zur Erzeugung der bereitzustellenden Leistung einstellt.

8. Verfahren nach einem der vorangehenden Ansprüche, bei dem in die Ermittlung des Leistungsaufnahmeprofils die Passagier- und/oder Güterbeladung des Schienenfahrzeugs, insbesondere des Zugverbundes, eingeht.

9. System zur Bereitstellung von elektrischer Energie für ein Eisenbahnnetzwerk (EB) befahrende Schienenfahrzeuge (6-14), umfassend:
a) eine Netzsteuerungseinheit (4) zum Ermitteln der aktuell fahrenden Schienenfahrzeuge und zum Erfassen ihrer Fahrparameter;
b) innerhalb der Netzsteuerungseinheit (4) eine Laststeuerungsinstanz (20) zum Ermitteln des Lastzustandes (L) und/oder Lastverteilung im Eisenbahnnet zwerk; und
c) die Laststeuerungsinstanz (20) die aktuell fahrenden Schienenfahrzeuge (6-14) so steuert, dass ein Anheben der Geschwindigkeit mindestens eines Schienenfahrzeugs (6, 8, 10, 14) über eine fahrplanmässig vorgesehene Reisegeschwindigkeit im Falle einer unterhalb eines Lastoptimums gelegenen Lastzustandes und/oder Lastverteilung und/oder ein Absenken der Geschwindigkeit mindestens eines Schienenfahrzeugs zur rekuperativen Einspeisung von elektrischer Energie im Falle eines oberhalb eines Lastoptimums gelegenen Lastzustandes und/oder Lastverteilung vorgesehen ist, wobei zur Lastoptimierung die Geschwindigkeit für mindestens ein Schienenfahrzeug (6, 8, 10, 14) vorausschauend anhebbar ist, bevor ein anderes Schienenfahrzeug (12) aufgrund eines Streckenprofils und/oder der Beladung einen besonderen Bedarf an elektrischer Leistung aufweist.

10. System nach Anspruch 9, bei dem das Lastoptimum unter Vermeidung der Erzeugung von Lastspitzen ermittelbar ist.

11. System nach Anspruch 9 oder 10, bei dem mit einer Netzsteuerungsinstanz die zeitliche und räumliche Verteilung
des besonderen Bedarfs an elektrischer Leistung ermittelbar ist bzw. dieser besondere Bedarf von einem Schienenfahrzeug (6-14) an die Netzsteuerungsinstanz meldet, wobei vorzugsweise auch andere Schienenfahrzeuge ihre Bereitschaft zum Anheben der Geschwindigkeit an die Netzsteuerungsinstanz melden.

12. System nach einem der Ansprüche 9 bis 11, bei dem das Eisenbahnnetzwerk (EB) in Fahrabschnitte unterteilt ist, und:
a) die Fahrabschnitte zur Bereitstellung der elektrischen Energie von einer Netzsteuerungseinheit (4) individuell ansteuer- und versorgbar sind;
b) ein in Abhängigkeit von der Zugart ermitteltes räumliches und zeitliches Leistungsaufnahmeprofil für eine Fahrt entlang einer vorbestimmten Anzahl von nacheinander zwischen zwei-Stationen befahrenen Fahrabschnitten für die
Netzsteuerungseinheit bereitstellbar ist; und
c) die Netzsteuerungsinstanz mit der Abfahrt des Schienenfahrzeugs aus der Abfahrtstation mindestens eine gemäss dem Leistungsaufnahmeprofil vorgegebene Leistung abschnittsweise bereitstellt.

13. System nach Anspruch 12, bei dem die Netzsteuerungseinheit (4) die Leistungsaufnahmeprofile mehrerer Schienenfahrzeuge abschnittsweise kumulativ bereitstellt.

## Claims

1. Method for providing electrical energy for rail vehicles (6 to 14) running on a rail network (EB), comprising the following steps:
a) determining the rail vehicles (6 to 14) currently running and recording their motion parameters;
b) determining the load state (L) and/or load distribution in the rail network (EB); and
c) increasing the speed of at least one rail vehicle (6, 8, 10, 14) above a scheduled speed if the load state and/or load distribution is below an optimum load and/or reducing the speed of at least one rail vehicle for regenerative feed-in of electrical energy if the load state and/or load distribution is above an optimum load, wherein for load optimisation the speed is increased for at least one rail vehicle (6, 8, 10, 14) pro-actively before another rail vehicle (12) has a particular electrical power requirement because of a line profile and or the train loading.

2. Method according to claim 1, wherein the optimum load is determined avoiding the generation of load peaks.

3. Method according to claim 1 or 2, wherein the time-related and spatial distribution of the particular electrical power requirement is determined using a supply control instance (4) or rather this particular electrical power requirement is reported to the supply control instance by a rail vehicle (6 to 14), other rail vehicles also preferably reporting to the supply control instance their readiness to increase speed.

4. Method according to one of claims 1 to 3, wherein the rail network is subdivided into running sections (Block_1 to Block_5), wherein:
a) the running sections (Block_1 to Block_5) are individually controllable and suppliable to provide the electrical energy;
b) a spatial and time-related power consumption profile (2), determined as a function of the type of train, for proceeding along a predetermined number of running sections (Block_1 to Block_5) traversed consecutively between two stations (ZH, BE) is provided for the supply control instance (4); and
c) when the rail vehicle leaves the departure station, the supply control instance (4) provides at least one power output predetermined according to the power consumption profile (2) on a section-by-section basis at least partly using the regeneratively fed-in electrical power.

5. Method according to claim 4, wherein the supply control instance (4) provides the power consumption profiles (2) of a plurality of rail vehicles cumulatively section by section.

6. Method according to claim 4 or 5, wherein the supply control instance (4) directly controls a substation (UW1 to UW5) which supplies electrical power directly to a running section (Block_1 to Block_5).

7. Method according to claim 6, wherein the supply control unit (4) selects, from the substation (UW1 to UW5), an energy generating unit to directly generate the electrical power to be provided.

8. Method according to one of the preceding claims, wherein determining the power consumption profile also involves the passenger and/or goods loading of the rail vehicle, in particular of the train composition.

9. System for providing electrical energy for rail vehicles (6-14) running on a rail network (EB), comprising:
a) a supply control unit (4) for determining the currently running rail vehicles and recording their motion parameters;
b) within the supply control unit (4), a load control instance (20) for determining the load state (L) and/or load distribution in the rail network; and
c) the load control instance (20) controls the rail vehicles (6 - 14) currently running such that an increasing of the speed of at least one rail vehicle (6, 8, 10, 14) above a scheduled speed is provided if the load state and/or load distribution is below an optimum load and/or a reduction in the speed of at least one rail vehicle is provided for regenerative feed-in of electrical energy if the load state and/or load distribution is above an optimum load, wherein for load optimisation the speed is increased for at least one rail vehicle (6, 8, 10, 14) pro-actively before another rail vehicle (12) has a particular electrical power requirement because of a line profile and/or the train loading.

10. System according to claim 9, wherein the optimum load can be determined avoiding the generation of load peaks.

11. System according to claim 9 or 10, wherein the time-related and spatial distribution of the particular electrical power requirement can be determined using a supply control instance or rather this particular requirement is reported by a rail vehicle (6 - 14) to the supply control instance, other rail vehicles also preferably reporting to the supply control instance their readiness to increase speed.

12. System according to one of claims 9 to 11, wherein the rail network (EB) is subdivided into running sections, and:
a) the running sections are individually controllable and suppliable by a supply control unit (4) to provide the electrical energy;
b) a spatial and time-related power consumption profile, determined as a function of the type of train, for proceeding along a predetermined number of running sections traversed consecutively between two station can be provided for the supply control unit; and
c) on departure of the rail vehicle from the departure station, the supply control instance provides at least one power output predetermined according to the power consumption profile section by section.

13. System according to claim 12, wherein the supply control unit (4) provides the power consumption profiles of a plurality of rail vehicles cumulatively section by section.

## Revendications

1. Procédé de mise à disposition d'énergie électrique pour des véhicules sur rail (6 à 14) circulant sur un réseau de voies ferrées (EB), comprenant les étapes suivantes :
a) détermination des véhicules sur rail (6 à 14) en train de circuler et détection de leurs paramètres de déplacement ;
b) détermination de l'état de charge (L) et/ou de la répartition de charge dans le réseau de voies ferrées (EB) ; et
c) augmentation de la vitesse d'au moins un véhicule sur rail (6, 8, 10, 14) pour la porter au-delà d'une vitesse de déplacement prévue conformément à l'horaire lorsqu'un état de charge et/ou une répartition de charge sont inférieurs à un optimum de charge et/ou réduction de la vitesse d'au moins un véhicule sur rail pour l'injection d'énergie électrique après récupération lorsqu'un état de charge et/ou une répartition de charge sont supérieurs à un optimum de charge, la vitesse d'au moins un véhicule sur rail (6, 8, 10, 14) pouvant, afin d'optimiser la charge, être augmentée de manière prévoyante avant qu'un autre véhicule sur rail (12) ne présente un besoin particulier en puissance électrique en raison d'un profil de trajet et/ou en raison de la charge.

2. Procédé selon la revendication 1, selon lequel l'optimum de charge est déterminé en évitant la production de pics de charge.

3. Procédé selon la revendication 1 ou 2, selon lequel la répartition temporelle et spatiale du besoin particulier en puissance électrique est déterminée au moyen d'une instance de commande de réseau (4) resp. ce besoin particulier est signalé par un véhicule sur rail (6 à 14) à l'instance de commande de réseau, d'autres véhicules sur rail signalant, également et préférentiellement, à l'instance de commande de réseau qu'ils sont prêts à augmenter la vitesse.

4. Procédé selon l'une des revendications 1 à 3, selon lequel le réseau de voies ferrées est subdivisé en tronçons de déplacement (Block_1 à Block_5),
a) les tronçons de déplacement (Block_1 à Block_5) pouvant être commandés et alimentés individuellement aux fins de la mise à disposition de l'énergie électrique ;
b) un profil d'absorption de puissance dans l'espace et dans le temps (2) déterminé en fonction du type de train pour un trajet le long d'un nombre prédéterminé de tronçons de déplacement (Block_1 à Block_5) utilisés successivement entre deux stations (ZH, BE) étant mis à la disposition de l'instance de commande de réseau (4) ; et
c) l'instance de commande de réseau (4), au moment où le véhicule sur rail quitte la station de départ, mettant à disposition, tronçon par tronçon, au moins une puissance prédéterminée conformément au profil d'absorption de puissance (2) tout en ayant recours, au moins en partie, à la puissance électrique injectée après récupération.

5. Procédé selon la revendication 4, selon lequel l'instance de commande de réseau (4) met à disposition, tronçon par tronçon et cumulativement, les profils d'absorption de puissance (2) de plusieurs véhicules sur rail.

6. Procédé selon la revendication 4 ou 5, selon lequel l'instance de commande de réseau (4) commande directement une sous-station (UW1 à UW5) qui injecte une puissance électrique directement dans un tronçon de déplacement (Block_1 à Block_5).

7. Procédé selon la revendication 6, selon lequel l'unité de commande de réseau (4) règle directement, à partir de la sous-station (UW1 à UW5), une unité de production d'énergie pour produire la puissance à mettre à disposition.

8. Procédé selon l'une des revendications précédentes, selon lequel interviennent, dans la détermination du profil d'absorption de puissance, la charge des passagers et/ou la charge des marchandises du véhicule sur rail, et plus particulièrement du convoi.

9. Système pour mettre à disposition de l'énergie électrique pour des véhicules sur rail (6 - 14) circulant sur un réseau de voies ferrées (EB), comprenant :
a) une unité de commande de réseau (4) pour déterminer les véhicules sur rail en train de circuler et pour détecter leurs paramètres de déplacement ;
b) au sein de l'unité de commande de réseau (4), une instance de commande de charge (20) pour déterminer l'état de charge (L) et/ou la répartition de charge dans le réseau de voies ferrées ; et
c) l'instance de commande de charge (20) qui commande les véhicules sur rail (6 - 14) en train de circuler de manière telle que sont prévues une augmentation de la vitesse d'au moins un véhicule sur rail (6, 8, 10, 14) pour la porter au-delà d'une vitesse de déplacement prévue conformément à l'horaire lorsqu'un état de charge et/ou une répartition de charge sont inférieurs à un optimum de charge et/ou une réduction de la vitesse d'au moins un véhicule sur rail pour l'injection d'énergie électrique après récupération lorsqu'un état de charge et/ou une répartition de charge sont supérieurs à un optimum de charge, la vitesse d'au moins un véhicule sur rail (6, 8, 10, 14) pouvant, afin d'optimiser la charge, être augmentée de manière prévoyante avant qu'un autre véhicule sur rail (12) ne présente un besoin particulier en puissance électrique en raison d'un profil de trajet et/ou en raison de la charge.

10. Système selon la revendication 9, selon lequel l'optimum de charge peut être déterminé en évitant la production de pics de charge.

11. Système selon la revendication 9 ou 10, selon lequel la répartition temporelle et spatiale du besoin particulier en puissance électrique peut être déterminée au moyen d'une instance de commande de réseau resp. ce besoin particulier est signalé par un véhicule sur rail (6 à 14) à l'instance de commande de réseau, d'autres véhicules sur rail signalant, également et préférentiellement, à l'instance de commande de réseau qu'ils sont prêts à augmenter la vitesse.

12. Système selon l'une des revendications 9 à 11, selon lequel le réseau de voies ferrées (EB) est subdivisé en tronçons de déplacement et :
a) les tronçons de déplacement peuvent être commandés et alimentés individuellement par une unité de commande de réseau (4) aux fins de la mise à disposition de l'énergie électrique ;
b) un profil d'absorption de puissance dans l'espace et dans le temps déterminé en fonction du type de train pour un trajet le long d'un nombre prédéterminé de tronçons de déplacement utilisés successivement entre deux stations est mis à la disposition de l'unité de commande de réseau ; et
c) l'instance de commande de réseau, au moment où le véhicule sur rail quitte la station de départ, met à disposition, tronçon par tronçon, au moins une puissance prédéterminée conformément au profil d'absorption de puissance.

13. Système selon la revendication 12, selon lequel l'unité de commande de réseau (4) met à disposition, tronçon par tronçon et cumulativement, les profils d'absorption de puissance de plusieurs véhicules sur rail.
